# EUROPEAN PATENT SPECIFICATION

(11) **EP 2 072 769 B1**
(45) Date of publication and mention of the grant of the patent: **16.06.2010**
(21) Application number: 07123902.4
(22) Date of filing: 21.12.2007
(51) Int. Cl.: F01N 1/06, G10K 11/178

(54) **A device and method for active noise cancellation in exhaust gas channel of a combustion engine**
Vorrichtung und Verfahren zur aktiven Lärmbekämpfung im Abgaskanal eines Verbrennungsmotors
Dispositif et procédé pour l'annulation active de bruit dans un canal de gaz d'échappement d'un moteur à combustion

(43) Date of publication of application: 24.06.2009
(73) Proprietor: ROBERT BOSCH GMBH, 70442 Stuttgart (DE)
(72) Inventor: Kassner, Uwe, 71696 Moeglingen (DE)

(56) References cited:
- EP-A- 0 481 450
- DE-A1- 19 543 409
- DE-A1- 19 861 018
- US-A- 5 325 438

## Description

### State of the art

The invention relates to the field of active noise cancellation in exhaust gas channel of a combustion engine. The patent EP 0 840 285 already discusses a device for noise cancellation, with means to receive a sound signal from the exhaust gas channel, means to generate an anti noise signal, which, when acoustically coupled to the sound from exhaust gas channel, the result will be cancellation of both signals, resulting in reduction in noise.

### Advantages of the invention

The invention with the features of the independent claims has the following advantages:

The invention which provides a feature to reduce the noise in the exhaust gas channel of a combustion engine, is additionally providing a feature to compute the temperature in the exhaust gas channel, without a temperature sensors or provides the possibility of diagnosis of a given exhaust gas temperature sensors.

Elimination of temperature sensors in the exhaust gas channel will result in reduced hardware. Reduction in hardware will directly result in savings in the cost. Also the elimination of temperature sensors will eliminate the requirements of wiring the temperature sensors to the electronic control unit through cables, periodic maintenance of the sensors in terms of calibrations, maintenance of the cables, replacements of hardware components when they are faulty etc.. If the calculated temperature is used to diagnose the signal of a given temperature sensor then a easy method of diagnosis is given which does not require a hardware element. Further the calculated temperature can be used in the case of a failure of the normal temperature sensor. So the overall system reliability is enhanced.

All the overheads described above are not required with the invention, as the estimation of the temperature is done only by using the feedback values from the sound sensors and the stored data records.

Further improvements and/or advantages are realised by the features of the dependent patent claims.

The major frequency component of the noise in the exhaust gas channel is estimated based on the engine speed. This involves only a simple but efficient computation.

The harmonics for the anti noise signal are generated based on the base frequency, which will further influence the noise in the exhaust gas channel.

As the pre stored data records are used to compute the dynamic part of the noise compensation, the control logic becomes simple and more efficient.

The relationship between the feedback signal and the temperature in the exhaust gas is available as pre stored data record, simplifying the computations at run time.

Also as the pre stored data records are created off line during application phase of the engine, large and accurate data can be stored.

### Short description of the drawings

Embodiments of the invention are shown in the drawings and described in detail in the description.

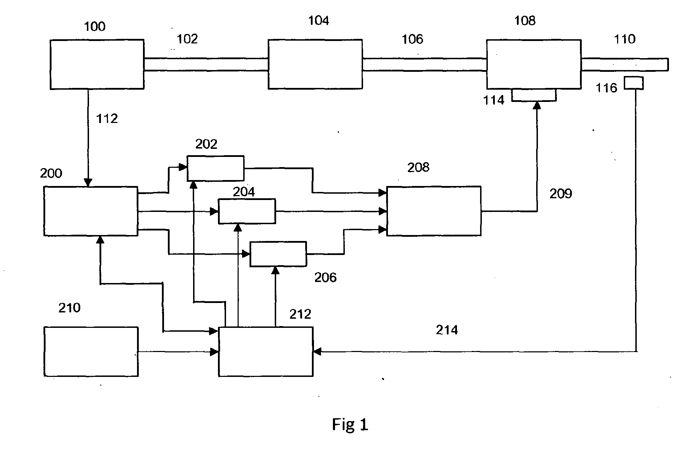

In the first embodiment, figure 1 shows a combustion engine, the exhaust gas channels, mufflers or catalytic converters, signal generator, digital filters, amplifier, calculation means, data records, sound converter and a sound sensing device.

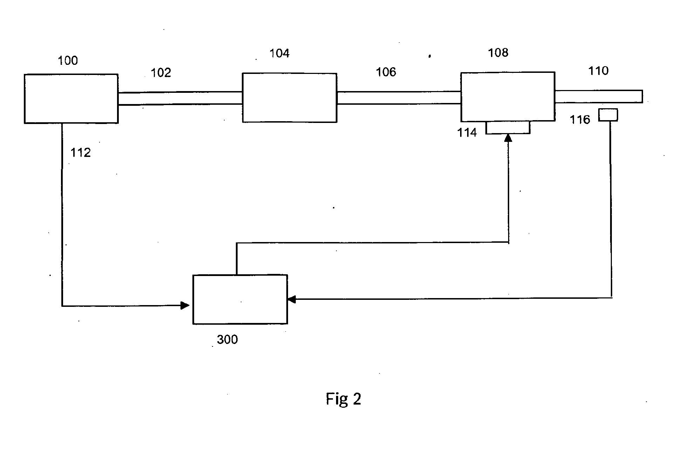

In the second embodiment, figure 2 shows a combustion engine, the exhaust gas channels, mufflers or catalytic converters, engine control unit which is used for all the engine control operations, sound converter and a sound sensing device.

### Detailed description of the embodiments of the invention

Figure 1 shows, a combustion engine 100 which is connected to an exhaust gas channel 102, 106 and 110. The exhaust gas channel includes an central muffler 104 and rear muffler 108. The combustion engine is connected over line 112 to the signal generator 200. The output of signal generator is connected to three digital filters 202, 204 and 206. The digital filters also receive inputs from the calculation means 212. The calculation means 212 refers to the data records 210 in order to control the filters. The outputs of the digital filters are given to an amplifier 208. The amplifier output is given to the sound converter 114 which is in close contact with the exhaust gas channel. The exhaust gas channel has a sound sensor 116 placed in it, output of sound sensor is connected to calculation means 212.

The combustion engine 100 mixes fuel and air in a cylinder, which is ignited, resulting in kinetic energy to move the vehicle. The residual from the combustion engine passes through the exhaust gas channel 102, 106 and 110. The exhaust gases cause noise in the exhaust gas channel. To some extent the mufflers 104 and 108 help in reducing the noise generated by the exhaust gases, but the additional noise reduction is done by the anti noise cancellation device.

The anti noise cancellation device typically operates by creating an anti-noise signal which has same frequency as noise signal, is equal in amplitude and opposite in phase with noise signal which needs to be reduced. When the noise signal and the anti-noise signal are acoustically combined, the two signals effectively cancel one another, significantly reducing the final sound, emitted into the surroundings of the exhaust.

Also the sound signal generated to reduce the noise signal, can be used to have a particular sound design in the surroundings.

The invention suggests a device which will reduce the noise in the exhaust gas channel of the combustion engine. This device will also perform the additional functionality of computing the temperature of the exhaust gases, thus eliminating the need to have dedicated temperature sensors in the exhaust gas channel or supply a method to control the proper function of an existing temperature sensor.

Figure 1 shows, the electronic device used for anti noise cancellation, comprises a signal generator 200, digital filters 202, 204, 206, amplifier 208, calculation means 212 and the data records 210.

The signal generator 200 receives the initial parameters like engine speed, engine load, and ignition cycle etc. from the combustion engine 100 over the connection 112. The major frequency component of the noise in the exhaust gas channel will be directly dependant on the engine speed. Because, the noise in the exhaust channel is generated when the exhaust gases rush into the exhaust gas channel. The frequency of the exhaust gases rushing into exhaust gas channel is dependant on the revolutions of the crankshaft, number of cylinders and number of strokes used in the cylinders of the combustion engine.

At 1000 RPM of the crankshaft, the frequency of the gases rushing through the exhaust may be estimated as below:
1000 RPM = 1000/60 revolutions per second ~ 16 revolutions per second

For 4 stroke engine, 2 revolutions will generate one burst of exhaust.

So, 16 revolutions per second will generate 8 bursts of exhaust.

For a 4 cylinder engine, number of bursts will be 4 times.
So frequency = 8 * 4 = 32 Hz

The major component of the noise in the exhaust gas channel consists of the base frequency shown in the example above. But the noise signal will also have noticeable energy in the harmonics of the base frequency.

The amplitude of the noise signal is dependant on the load of the engine. Based on the initial parameters, the calculation means 212 computes the base frequency of the noise generated in the exhaust gas channel. The signal generator 200 generates the estimated base frequency and its harmonics and feeds them to the digital filters 202, 204,206. The filters are used to control the individual frequencies, their amplitudes and the phase differences needed. The filter parameters are controlled by the calculation means 212 to generate the signals with appropriate amplitude and phase differences to reduce the noise in the exhaust gas channel. The output from the digital filters is given to an amplifier 208. The output of the amplifier is used to drive a sound converter 114 like loud speaker, which is placed in the exhaust gas channel. The outlet of the speaker enclosure and exhaust gas channel are positioned such that the acoustic coupling between the exhaust gas noise and anti noise signal, result in a significant reduction of the total exhaust noise level.

The static part of the noise reduction is done by estimating the base frequency using the engine speed and engine load parameters. Any correction required for the static part of the noise reduction is available in the pre stored data records. These data records are stored during the application phase of the engine test, during which the engine is tested under different conditions and the needed parameters are stored in the data records. The base frequency and its harmonics are generated with appropriate amplitude and phase and through the filters, amplifier and sound converter, the anti noise signal is finally mixed with the noise in the exhaust channel to reduce the noise.

The dynamic part of the noise reduction is done using the feedback loop from the sound sensor.

Any residual noise which remains in the exhaust gas channel 110 is received by a sound sensor 116. The sound sensor may be a microphone or any similar transducer. The sound sensor produces exhaust noise feedback signal which is transmitted back to the calculation means 212. The exhaust noise feedback signal represents residual error between the exhaust noise and the anti noise signal.

The calculation means 212 and the signal generator 200 will use the feedback signal along with the pre stored data records to fine tune the parameters of the digital filters so that the resulting sound in the exhaust gas channel is at minimum level for the given conditions or for sound design.

The same device reducing the noise in exhaust gas channel has the capability to compute the temperature of the exhaust gas in the exhaust gas channel based on the feedback signal and pre stored data records.

For the determination of pre stored data, a test engine of type of the later engine is used. Beside fabrication tolerances, test engine will have similar characteristics as that of the actual engine in the vehicle.

During the test phase, a temperature sensor is used to determine a connection between anti sound signal, feedback signal (or strength of residual noise) and temperature of exhaust gas.

A table of data records is prepared, the table containing the information about frequency and phase of the anti noise signal, phase of the feed back signal and the temperature of the exhaust gas read using a temperature sensor.

In the actual engine running in a vehicle, when the feedback signal is received from the sound sensor 116, the calculation means refers the data records to compute the temperature of the exhaust gas based on the feed back signal.

The device is housed in a casing with input connection 112 for connection with engine, input connection 214 from sound sensor and an output connection 209 for sound converter, and other required wiring for power supply.

The digital filters are shown in the figure 1 as separate elements as an example. But the digital filters can also be built into the signal generator.

Figure 2 shows another embodiment of the invention. Here 100, 102, 104, 106, 108, 110, 112 and 114 are same elements as shown in figure 1 and have the same functionality. The electronic device used for anti noise cancellation is integrated into the existing engine control unit 300.

The electronic control unit 300 does the complete control and monitoring of the vehicle engine. The functionality of anti noise cancellation is made part of the engine control unit 300 by integrating the signal generator, filters, amplifier, calculation means and data records as a single unit

## Claims

1. A device for active noise cancellation in exhaust gas channel of a combustion engine, comprising,
- a sound sensor (116) to receive a sound signal from exhaust gas channel
- signal generator (200) to generate a frequency signal, to influence the sound generated in the exhaust gas channel,
- calculation means (212) receiving the sound signal and generating control signals to influence amplitude and phase of the frequency signal,
**characterised in that** the calculation means (212) also calculates a temperature information of an exhaust gas in the exhaust gas channel based on the sound signal received from the sound sensor (116).

2. A device as claimed in claim 1 **characterised in that**, for the calculation of the temperature of the exhaust gas channel, pre-stored data records (210) are derived during the application phase under which the engine is tested under different conditions and the data records are stored, the calculation of the temperature of the exhaust gas being based on the pre-stored data records (210).

3. A device as claimed in claim 1 **characterised in that** the signal generator (200) to generate the frequency signal receives a speed signal of combustion engine and derives a first frequency signal dependant of the speed signal.

4. A device as claimed in claim 1 **characterised in that** the signal generator (200) to generate the frequency signal, generates further frequencies which are harmonics of the first frequency.

5. A device as claimed in claim 1 **characterised in that** the calculation means (212) uses pre-stored data records (210) giving dependency between engine speed, engine load and, phase and amplitude of the frequency signal.

6. A device as claimed in claim 1 **characterised in that** the calculation means (212) uses pre-stored data records (210) giving dependency between the temperature of the exhaust gas channel and the sound signal.

7. A device as claimed in claim 1 **characterised in that** the calculation means (212) receives the feed back signal from the sound sensor (116) and derives the control signals for the signal generator (200) and filters (202,204,206)

8. Method of operating a combustion engine **characterised by** the steps of
- receiving a sound signal from an exhaust gas channel of the combustion engine through a sound sensor (116),
- based on received sound signal, generating control signals for a signal generator (200) and digital filters(202,204,206), to influence amplitude and phase of a frequency signal,
- acoustically coupling the frequency signal with the sound generated in the exhaust gas channel using a sound converter (114), to influence the sound generated in the exhaust gas channel,
**characterised in** the further step of
- calculating a temperature information of the exhaust gas based on the received sound signal and pre stored data records (210).

## Patentansprüche

1. Einrichtung zur aktiven Schallunterdrückung in einem Abgaskanal eines Verbrennungsmotors, umfassend:
- einen Schallsensor (116) zum Empfangen eines Schallsignals von einem Abgaskanal,
- Signalgenerator (200) zum Erzeugen eines Frequenzsignals, zum Beeinflussen des in dem Abgaskanal erzeugten Schalls,
- Berechnungsmittel (212), das das Schallsignal empfängt und Steuersignale erzeugt, um Amplitude und Phase des Frequenzsignals zu beeinflussen,
**dadurch gekennzeichnet, daß** das Berechnungsmittel (212) auch eine Temperaturinformation eines Abgases in dem Abgaskanal auf der Basis des von dem Schallsensor (116) empfangenen Schallsignals berechnet.

2. Einrichtung nach Anspruch 1, **dadurch gekennzeichnet, daß** für die Berechnung der Temperatur des Abgaskanals vorgespeicherte Datenaufzeichnungen (210) während der Anwendungsphase abgeleitet werden, unter der der Motor unter verschiedenen Bedingungen getestet wird und die Datenaufzeichnungen gespeichert werden, wobei die Berechnung der Temperatur des Abgases auf den vorgespeicherten Datenaufzeichnungen (210) basiert.

3. Einrichtung nach Anspruch 1, **dadurch gekennzeichnet, daß** der Signalgenerator (200) zum Erzeugen des Frequenzsignals ein Drehzahlsignal des Verbrennungsmotors empfängt und ein von dem Drehzahlsignal abhängiges erstes Frequenzsignal ableitet.

4. Einrichtung nach Anspruch 1, **dadurch gekennzeichnet, daß** der Signalgenerator (200) zum Erzeugen des Frequenzsignals weitere Frequenzen erzeugt, die Oberschwingungen der ersten Frequenz sind.

5. Einrichtung nach Anspruch 1, **dadurch gekennzeichnet, daß** das Berechnungsmittel (212) vorgespeicherte Datenaufzeichnungen (210) verwendet, die eine Abhängigkeit zwischen der Motordrehzahl, der Motorlast und der Phase und Amplitude des Frequenzsignals ergeben.

6. Einrichtung nach Anspruch 1, **dadurch gekennzeichnet, daß** das Berechnungsmittel (212) vorgespeicherte Datenaufzeichnungen (210) verwendet, die eine Abhängigkeit zwischen der Temperatur des Abgaskanals und dem Schallsignal ergeben.

7. Einrichtung nach Anspruch 1, **dadurch gekennzeichnet, daß** das Berechnungsmittel (212) ein Rückkopplungssignal von dem Schallsensor (116) empfängt und die Steuersignale für den Signalgenerator (200) und Filter (202, 204, 206) ableitet.

8. Verfahren zum Betreiben eines Verbrennungsmotors, **gekennzeichnet durch** die folgenden Schritte:
- Empfangen eines Schallsignals von einem Abgaskanal des Verbrennungsmotors **durch** einen Schallsensor (116),
- Erzeugen von Steuersignalen für einen Signalgenerator (200) und digitale Filter (202, 204, 206) auf der Basis des empfangenen Schallsignals, um Amplitude und Phase eines Frequenzsignals zu beeinflussen,
- akustisches Koppeln des Frequenzsignals mit dem in dem Abgaskanal erzeugten Schall unter Verwendung eines Schallkonverters (114) zum Beeinflussen des in dem Abgaskanal erzeugten Schalls,
**gekennzeichnet durch** den weiteren Schritt:
- Berechnen einer Temperaturinformation des Abgases auf der Basis des empfangenen Schallsignals und vorgespeicherter Datenaufzeichnungen (210).

## Revendications

1. Dispositif d'élimination active du bruit dans un conduit de gaz d'échappement d'un moteur à combustion, le dispositif comprenant :
- un détecteur de sons (116) conçu pour recevoir un signal sonore provenant du conduit de gaz d'échappement,
- un générateur de signaux (200) conçu pour générer un signal de fréquence destiné à influer sur le son produit dans le conduit de gaz d'échappement,
- un moyen de calcul (212) recevant le signal sonore et générant des signaux de commande destinés à influer sur l'amplitude et la phase du signal de fréquence,
**caractérisé en ce que** le moyen de calcul (212) calcule également une information de température d'un gaz d'échappement dans le conduit de gaz d'échappement en fonction du signal sonore reçu du détecteur de sons (116).

2. Dispositif selon la revendication 1, **caractérisé en ce que**, pour le calcul de la température du gaz d'échappement dans le conduit de gaz d'échappement, des enregistrements de données pré-mémorisés (210) sont obtenus lors la phase d'application au cours de laquelle le moteur est mis à l'essai dans différentes conditions et les enregistrements de données sont mémorisés, le calcul de la température du gaz d'échappement faisant appel aux enregistrements de données pré-mémorisés (210).

3. Dispositif selon la revendication 1, **caractérisé en ce que** le générateur de signaux (200) conçu pour générer le signal de fréquence reçoit un signal de régime du moteur à combustion et déduit du signal de régime un premier signal de fréquence.

4. Dispositif selon la revendication 1, **caractérisé en ce que** le générateur de signaux (200) conçu pour générer le signal de fréquence génère d'autres fréquences correspondant à des harmoniques de la première fréquence.

5. Dispositif selon la revendication 1, **caractérisé en ce que** le moyen de calcul (212) utilise des enregistrements de données pré-mémorisés (210) établissant une dépendance entre le régime du moteur, la charge du moteur et la phase et l'amplitude du signal de fréquence.

6. Dispositif selon la revendication 1, **caractérisé en ce que** le moyen de calcul (212) utilise des enregistrements de données pré-mémorisés (210) établissant une dépendance entre la température du gaz d'échappement dans le conduit de gaz d'échappement et le signal sonore.

7. Dispositif selon la revendication 1, **caractérisé en ce que** le moyen de calcul (212) reçoit un signal de rétroaction du détecteur de sons (116) et en déduit les signaux de commande destinés au générateur de signaux (200) et à des filtres (202, 204, 206).

8. Procédé de fonctionnement d'un moteur à combustion, **caractérisé par** les étapes consistant à :
- recevoir, par le biais d'un détecteur de sons (116), un signal sonore provenant d'un conduit de gaz d'échappement du moteur à combustion,
- générer, en fonction du signal sonore reçu, des signaux de commande destinés à un générateur de signaux (200) et à des filtres numériques (202, 204, 206) de façon à influer sur l'amplitude et la phase d'un signal de fréquence,
- assurer le couplage acoustique du signal de fréquence et du son produit dans le conduit de gaz d'échappement à l'aide d'un convertisseur de sons (114) de façon à influer sur le son produit dans le conduit de gaz d'échappement,
**caractérisé par** l'étape supplémentaire consistant à :
- calculer une information de température du gaz d'échappement en fonction du signal sonore reçu et d'enregistrements de données pré-mémorisés (210).
